# DEMANDE DE BREVET EUROPEEN

(11) **EP 1 439 698 A1**
(43) Date de publication de la demande: **21.07.2004**
(21) Numéro de dépôt: 04290077.9
(22) Date de dépôt: 12.01.2004
(51) Int. Cl.: H04N 7/18, H04N 1/00, B64C 39/02, G01C 11/00, G01C 15/00

(54) **Procédé, appareil et systéme pour effectuer des relevés de caractéristiques visibles sur des faces en surplomb d'une structure**

(30) Priorité: 14.01.2003 FR 0300352
(71) Demandeur: Concrete, 69120 Vaulx-en-Velin (FR); Grenier, Laurent, 16400 La Couronne (FR)
(72) Inventeur: Remy, Pascal, 01150 Blyes (FR); Grenier, Laurent, 16400 La Couronne (FR)
(74) Mandataire: Burbaud, Eric

(57) **Abrégé**

On fait voler sous une face en surplomb un aéronef télécommandé (1 ) comportant un fuselage (3), un système de propulsion (2) placé sous le fuselage, des moyens d'imagerie (18) placés au-dessus du fuselage. L'appareil de prise de vues étant orienté vers une partie de la paroi à inspecter (6), on enregistre au moins une image de la face en surplomb de structure obtenue les moyens d'imagerie, puis on analyse l'image enregistrée pour détecter et/ou observer des caractéristiques visibles telles que des défauts, qu'on peut localiser ensuite à l'aide d'une position associée à l'image enregistrée, déterminée à partir des paramètres spatiaux mesurés au moment de l'obtention de cette image.

## Description

La présente invention concerne les techniques utilisées pour effectuer des relevés de caractéristiques visibles sur des zones de structures, notamment d'ouvrages de construction ou encore des structures naturelles telles que des falaises. Les caractéristiques faisant l'objet de ces relevés sont typiquement des défauts structurels que présentent les parois inspectées (fissures, etc.). Elles peuvent également être des détails apparents sur les parois.

Habituellement les relevés de désordres sur des parois d'ouvrages de génie civil et de bâtiments ou encore des parois naturelles sont réalisés par du personnel travaillant en hauteur (alpinistes), par l'utilisation de nacelles ou d'échafaudages. Ces méthodes sont relativement difficiles à appliquer pour inspecter des faces en surplomb existant dans certains ouvrages tels que des ponts ou des viaducs.

FR-A-2 807 603 décrit un procédé d'inspection perfectionné, dans lequel on fait voler un aéronef télécommandé, tel qu'un hélicoptère miniature, équipé de moyens d'imagerie pour transmettre et enregistrer des images de la paroi. Cependant cette technique ne permet pas de relever des caractéristiques sur des faces en surplomb d'une structure. Le fuselage et le rotor de l'hélicoptère miniature empêchent en effet le système d'imagerie monté sur le train d'atterrissage de pouvoir observer ces faces en surplomb.

Du fait de ces difficultés, l'observation de la face inférieure du tablier ou des arches d'un viaduc est généralement effectuée à l'aide d'une nacelle montée sur un bras mobile porté par un véhicule spécial circulant sur le viaduc. Cette méthode a pour inconvénient de bloquer la circulation sur le viaduc, inconvénient d'autant plus sensible que la méthode est lente. Les évolutions du véhicule et du bras sont gênées par des obstacles présents sur le viaduc tels que des garde-corps ou des pylônes de caténaire. Elle est inapplicable à des ouvrages suspendus ou haubanés.

La présente invention a pour but de pallier les limitations ci-dessus.

L'invention propose ainsi un procédé pour effectuer un relevé de caractéristiques visibles sur une face en surplomb d'une structure, dans lequel on fait voler sous ladite face un aéronef télécommandé, comportant un fuselage, un système de propulsion placé sous le fuselage, et des moyens d'imagerie placés au dessus du fuselage, on enregistre au moins une image de la face en surplomb obtenue par les moyens d'imagerie et on analyse l'image enregistrée pour relever des caractéristiques visibles.

L'aéronef peut voler sous les parois naturelles ou celles des ouvrages en surplomb, et/ou faire du vol stationnaire pour réaliser des images vidéo ou des clichés photographiques des zones se trouvant sur le dessus de l'aéronef. Les désordres, ou plus généralement les caractéristiques relevées, peuvent être enregistrés sous forme d'images vidéo et/ou de clichés photographiques.

Cette technique permet d'analyser les faces en surplomb qu'il serait difficile voire impossible, d'approcher et/ou d'étudier en utilisant les techniques classiques : nacelles, échafaudages, alpinistes ou hélicoptères télécommandés. Elle offre la possibilité de revenir plusieurs fois sur une caractéristique si les relevés précédents sont insuffisants ou si l'analyse suggère des prises de vue supplémentaires.

Dans un mode d'exécution de procédé, on mesure des paramètres spatiaux représentatifs de la position de l'aéronef en vol, de la distance entre l'appareil de prise de vue et la face en surplomb et de l'orientation d'un appareil de prise de vue inclus dans les moyens d'imagerie, on oriente l'appareil de prise de vue vers une partie de la face en surplomb et on enregistre au moins une image obtenue par l'appareil de prise de vue, ainsi que la position associée à l'image enregistrée déterminée à partir des paramètres spatiaux mesurés au moment de l'obtention de ladite image.

La détermination des paramètres spatiaux permet de positionner automatiquement les désordres observés, et d'effectuer toutes sortes d'analyses, typologiques ou topologiques.

Typiquement, les paramètres spatiaux sont fournis en temps réel à une station de contrôle située au sol, de même que des images de la paroi prises par les moyens d'imagerie.

Pour plus de détails sur la façon d'obtenir les différents paramètres spatiaux caractérisant les images enregistrées, on pourra se rapporter à la demande de brevet FR-A-2 807 603.

Un autre aspect de l'invention se rapporte à un appareil pour effectuer un relevé de caractéristiques visibles sur une face en surplomb d'une structure, comprenant un aéronef télécommandé comportant un fuselage, un système d'atterrissage définissant un plan d'atterrissage, un système de propulsion placé entre le fuselage et le plan d'atterrissage et des moyens d'imagerie placés au-dessus du fuselage.

Le système de propulsion peut comprendre un rotor principal d'hélicoptère, et une partie au moins du système d'atterrissage peut être montée sur un moyeu du rotor.

Le système d'atterrissage comprend un train d'atterrissage qui peut être fixe par rapport au fuselage ou rétractable.

Un autre aspect de l'invention se rapporte à un système pour effectuer un relevé de caractéristiques visibles sur une face en surplomb d'une structure, comportant un appareil défini dans l'une des configurations décrites ci-dessus et où, avantageusement, les moyens d'imagerie embarqués sur l'aéronef comprennent au moins un appareil de prise de vue, le système comprenant en outre des moyens d'obtention de paramètres spatiaux représentatifs de la position de l'aéronef en vol, de l'orientation de l'appareil de prise de vues et de la distance entre l'appareil de prise de vues et une partie de la zone située dans le champ de l'appareil de prise de vues, des moyens d'enregistrement d'au moins une image obtenue par l'appareil de prise de vues, et des moyens d'analyse de l'image enregistrée pour relever des caractéristiques visibles localisées à l'aide d'une position associée à l'image enregistrée, déterminée à partir des paramètres spatiaux mesurés au moment de l'obtention de ladite image.

Ce système sera typiquement commandé par un opérateur depuis une station de contrôle au sol, des moyens de transmission sans fil étant prévus entre l'aéronef et la station de contrôle, pour fournir en temps réel des images de l'ouvrage prises par les moyens d'imagerie et une partie au moins des paramètres spatiaux.

D'autres particularités et avantages de la présente invention apparaîtront dans la description ci-après d'exemples de réalisation non limitatifs, en référence aux dessins annexés, dans lesquels :
- la figure 1 est un schéma montrant un système conforme à l'invention en fonctionnement ;
- les figures 2 et 3 sont des schémas présentant respectivement une vue de côté et une vue de dessus d'un aéronef agencé conformément à l'invention ;
- les figures 4 et 5 sont des schémas présentant respectivement une vue de côté et une vue de dessus d'un autre aéronef agencé conformément à l'invention.

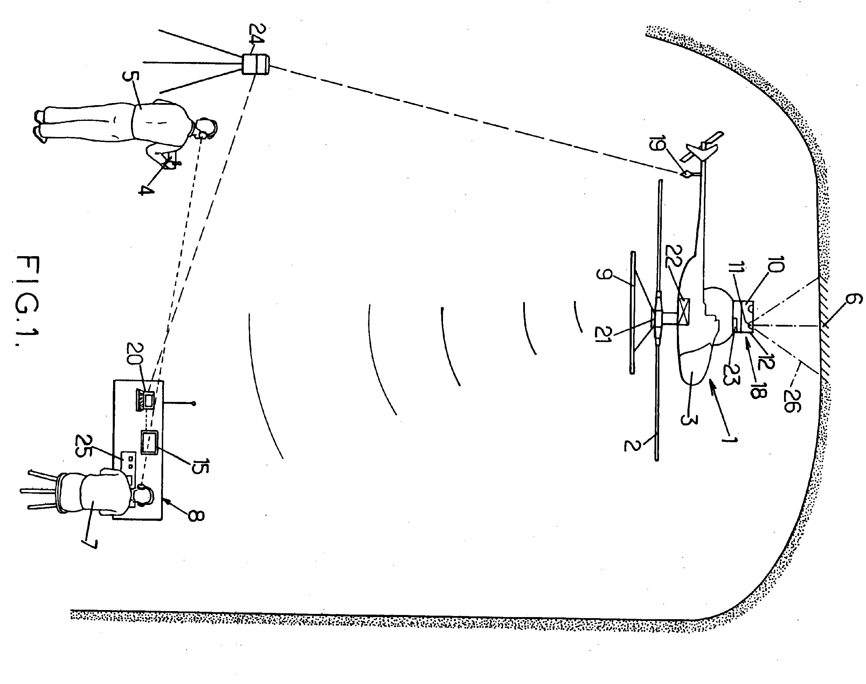

Le système représenté sur la figure 1 comprend un aéronef modèle réduit 1 radiocommandé depuis le sol par un pilote 5 ; cet aéronef est de type hélicoptère, mais il a pour particularité d'avoir comme système de propulsion un rotor principal d'hélicoptère 2 placé sous le fuselage 3. A l'aide de la télécommande 4, le pilote 5 contrôle la trajectoire de l'hélicoptère 1 notamment pour le faire évoluer en regard d'une face surplombante à inspecter 6 appartenant par exemple à un ouvrage de construction tel qu'un viaduc.

Dans l'exemple représenté, une deuxième personne intervient, à savoir un opérateur 7 installé à une station de contrôle 8. La station 8 et l'hélicoptère 1 sont respectivement équipés d'émetteurs/récepteurs radio de type conventionnel reliés à des antennes HF permettant d'échanger des signaux dans les deux sens entre la station de contrôle et l'hélicoptère.

L'hélicoptère 1 est équipé de moyens d'imagerie 18 comprenant, dans l'exemple considéré, une caméra vidéo 10 et un appareil photographique 11. La caméra 10 et l'appareil 11 sont par exemple placés dans un caisson commun 12 monté sur un support orientable en partie supérieure du fuselage de l'hélicoptère 1.

Les images vidéo prises par la caméra 10 font partie des données transmises par radio à la station de contrôle 8. Ces images sont affichées sur un écran de contrôle 15 pour être visualisées par l'opérateur 7. A l'aide d'une interface de commande appropriée 25, l'opérateur 7 peut alors retransmettre par radio vers l'hélicoptère diverses commandes destinées aux moyens d'imagerie :
- orientation des moyens d'imagerie (réglages de CA et CS, respectivement azimut et site de l'axe de prise de vue par rapport à l'hélicoptère 1) dans le cas où leur montage sur l'hélicoptère permet ces réglages. A titre d'exemple, le montage de l'appareil photo peut être motorisé en rotation horizontale et verticale.
- marche/arrêt des moyens d'imagerie ;
- commande de prise d'un cliché par l'appareil photographique 11 ;
- divers réglages de l'appareil photographique 11 et/ou de la caméra vidéo 10 (ouverture de diaphragme, temps d'exposition, zoom, ...).

Les clichés photographiques peuvent également être transmis immédiatement à la station de contrôle 8. La photographie permet une observation plus fine que la vidéo, de sorte qu'après avoir visualisé ou analysé une caractéristique visible sur la paroi 6, affichée sur l'écran 15, l'opérateur 7 peut donner au pilote 5 l'instruction de faire revenir l'hélicoptère sur cette caractéristique ou de déplacer l'hélicoptère pour obtenir une vue différente, etc.

Le système comprend d'autre part des appareils de mesure de la position et de l'orientation de l'hélicoptère 1 : une base de visée et télémétrie 24 coopérant, via un faisceau laser asservi, avec une cible à prismes réflecteurs 19 fixée au fuselage de l'hélicoptère, permettant la détermination des coordonnées x, y et z, transmises en temps réel à un ordinateur 20 de la station de contrôle 8, par exemple par l'intermédiaire d'une interface classique de type PCMCIA.

Pour connaître l'orientation de l'hélicoptère 1 dans l'espace, on le munit d'une centrale gyrométrique 22 de type classique, donnant les angles d'azimut HA et de site HS de l'aéronef par rapport à un repère fixe. Les angles HA, HS mesurés par la centrale gyrométrique 22 sont communiqués à la station de contrôle 8 par la liaison radio.

L'hélicoptère 1 est d'autre part équipé d'un télémètre 23 porté par le même support que le caisson 12 et orienté parallèlement à l'axe du champ de vision 26 des moyens d'imagerie. Ce télémètre 23 fonctionne en réflexion pour mesurer la distance de la partie de l'ouvrage inspecté illuminée par son faisceau. Cette distance d est également communiquée à la station de contrôle 6 par liaison radio.

Grâce aux dispositions précédentes, l'ordinateur 20 dispose en temps réel de paramètres spatiaux x, y, z, d, HS, HA, CS, CA qui sont reçus de la base 24 (pour x, y, z) ou de l'hélicoptère 1 par la liaison radio (pour d, HS, HA) ou déduits de commandes générées depuis la station de contrôle 8 (pour CS, CA). A partir de ces coordonnées, l'ordinateur 20 peut calculer la position dans l'espace de la partie de la paroi 6 située dans le champ des moyens d'imagerie.

Lorsqu'un cliché est pris par l'appareil photographique 11, il est mémorisé en association avec la position de la zone observée. On peut ainsi effectuer un relevé de défauts automatisé, en mettant l'observation en relation avec un plan de l'ouvrage dressé au préalable.

Dans la réalisation schématisée sur la figure 1, le système d'atterrissage 9 de l'aéronef 1 consiste en un train d'atterrissage fixé au fuselage 3 au niveau du moyeu 21 du rotor 2.

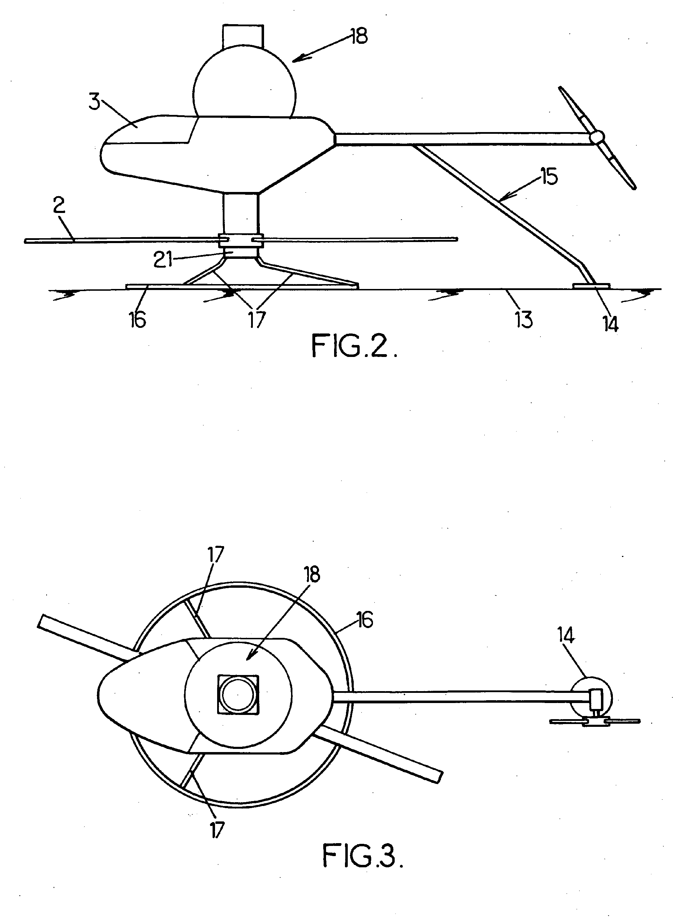

Ce train d'atterrissage est représenté de façon plus détaillée sur les figures 2 et 3. Sur la figure 2, on voit qu'il définit un plan d'atterrissage 13 situé sous la zone dans laquelle tourne le rotor 2, laquelle zone est elle-même située sous le fuselage 3. Le train d'atterrissage comporte par exemple un patin annulaire 16 relié au moyeu 21 par l'intermédiaire de trois bras 17 orientés à 120 degrés les uns des autres.

Pour stabiliser l'aéronef au sol, le système d'atterrissage 9 peut comporter un patin supplémentaire 14 à l'arrière de l'appareil, relié à la queue du fuselage par un bras 15. Ce bras 15 a une forme adaptée pour ne pas gêner la rotation du rotor 2.

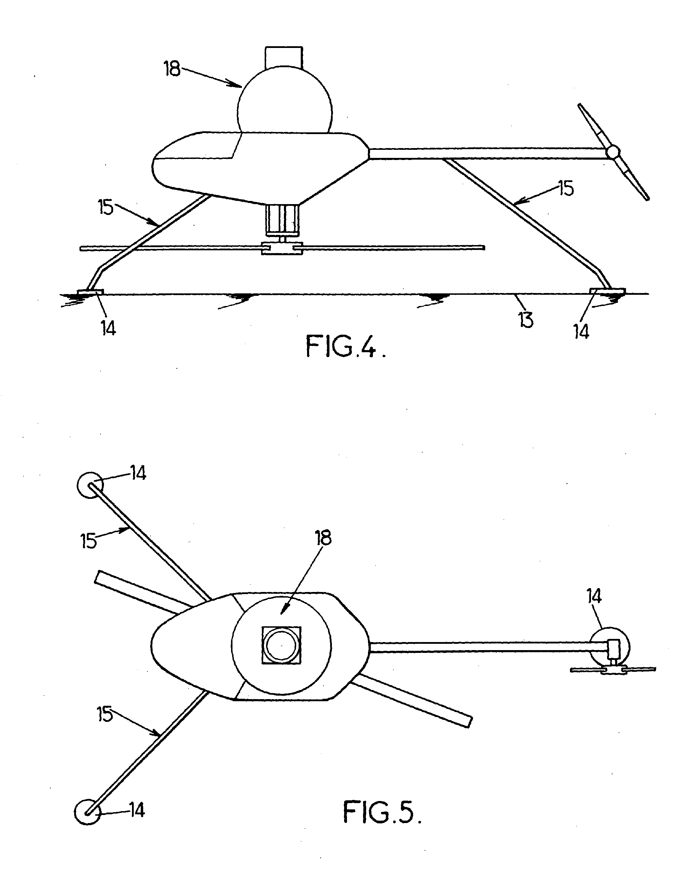

Les figures 4 et 5 illustrent un autre agencement possible du système d'atterrissage 9 de l'aéronef 1. Le plan d'atterrissage 13 est ici défini par trois patins 14 reliés au fuselage par trois bras respectifs 15. Le patin arrière 14 peut avoir un montage similaire à celui des figures 2 et 3. Les deux autres patins 14 sont reliés à l'avant du fuselage par des bras dont le tracé évite la trajectoire du rotor.

Les bras 15 peuvent éventuellement être articulés afin de permettre une rétractation du système d'atterrissage en vol. De même, un train d'atterrissage fixé au moyeu 21 du rotor, peut, dans certaines réalisations, être rétractable vers le fuselage si le moyeu 21 dispose d'un logement permettant une telle rétractation.

Les structures d'aéronefs illustrées par les figures 2 à 5 sont simplement fournies à titre d'exemples. On comprendra que de nombreux autres agencements des systèmes de propulsion et d'atterrissage sont possibles dans le cadre de la présente application. Le système de propulsion pourrait notamment être autre qu'un rotor principal d'hélicoptère. Il pourrait notamment comporter une ou plusieurs turbines orientées vers le bas.

## Revendications

1. Procédé pour effectuer un relevé de caractéristiques visibles sur une face en surplomb (6) d'une structure, dans lequel on fait voler sous ladite zone un aéronef télécommandé (1), comportant un fuselage (3), un système de propulsion (2) placé sous le fuselage, et des moyens d'imagerie (18) placés au-dessus du fuselage, on enregistre au moins une image de la zone en surplomb obtenue par les moyens d'imagerie et on analyse l'image enregistrée pour relever des caractéristiques visibles.

2. Procédé selon la revendication 1, dans lequel on mesure des paramètres spatiaux représentatifs de la position de l'aéronef (1) en vol, de la distance entre l'appareil de prise de vue et la face en surplomb (6) et de l'orientation d'un appareil de prise de vue (10,11) inclus dans les moyens d'imagerie (18), on oriente l'appareil de prise de vue vers une partie de la face en surplomb et on enregistre au moins une image obtenue par l'appareil de prise de vue, ainsi que la position associée à l'image enregistrée déterminée à partir des paramètres spatiaux mesurés au moment de l'obtention de ladite image.

3. Procédé selon la revendication 2, dans lequel les paramètres spatiaux sont transmis en temps réel à une station de contrôle (8) située au sol, de même que des images de la zone prises par les moyens d'imagerie (18).

4. Procédé selon l'une quelconque des revendications 1 à 3, dans lequel l'aéronef (1) comporte un système d'atterrissage (9 ; 14-17) définissant un plan d'atterrissage (13), et dans lequel le système de propulsion (2) se trouve entre le fuselage (3) et le plan d'atterrissage (13).

5. Appareil pour effectuer un relevé de caractéristiques visibles sur une face en surplomb (6) d'une structure, comprenant un aéronef télécommandé (1) comportant un fuselage (3), un système d'atterrissage (9 ; 14-17) définissant un plan d'atterrissage (13), un système de propulsion (2) placé entre le fuselage et le plan d'atterrissage et des moyens d'imagerie (18) placés au-dessus du fuselage.

6. Appareil selon la revendication 5, dans lequel le système de propulsion comprend un rotor principal d'hélicoptère (2).

7. Appareil selon la revendication 6, dans lequel une partie au moins du système d'atterrissage (9 ; 16-17) est montée sur un moyeu (21) du rotor.

8. Appareil selon l'une quelconque des revendications 5 à 7, dans lequel le système d'atterrissage comprend un train d'atterrissage fixe par rapport au fuselage (3).

9. Appareil selon l'une quelconque des revendications 5 à 7, dans lequel le système d'atterrissage comprend un train d'atterrissage rétractable.

10. Système pour effectuer un relevé de caractéristiques visibles sur une face en surplomb d'une structure, comportant un appareil selon l'une quelconque des revendications 5 à 9, dans lequel les moyens d'imagerie (18) embarqués sur l'aéronef comprennent au moins un appareil de prise de vue (10, 11), le système comportant en outre des moyens d'obtention de paramètres spatiaux représentatifs de la position de l'aéronef en vol, de l'orientation de l'appareil de prise de vues et de la distance entre l'appareil de prise de vues et une partie de la zone située dans le champ de l'appareil de prise de vues, des moyens d'enregistrement d'au moins une image obtenue par l'appareil de prise de vues, et des moyens d'analyse de l'image enregistrée pour relever des caractéristiques visibles localisées à l'aide d'une position associée à l'image enregistrée, déterminée à partir des paramètres spatiaux mesurés au moment de l'obtention de ladite image.

11. Système selon la revendication 10, comprenant une station de contrôle au sol (8) et des moyens de transmission sans fil entre l'aéronef et la station de contrôle, pour fournir en temps réel des images de la zone étudiée prises par les moyens d'imagerie et une partie au moins des paramètres spatiaux
